# EUROPEAN PATENT APPLICATION

(11) **EP 4 542 386 A1**
(43) Date of publication of application: **23.04.2025**
(21) Application number: 23849105.4
(22) Date of filing: 28.06.2023
(51) Int. Cl.: G06F 9/50

(54) **DATA PROCESSING METHOD AND APPARATUS**

(30) Priority: 30.07.2022 CN 202210912516
(71) Applicant: Huawei Technologies Co., Ltd., Shenzhen, Guangdong 518129 (CN)
(72) Inventor: ZENG, Dexun, Shenzhen, Guangdong 518129 (CN)
(74) Representative: Pfenning, Meinig & Partner mbB
(86) International application number: PCT/CN2023/103486
(87) International publication number: WO 2024/027395

(57) **Abstract**

A data processing method and apparatus are provided. The method includes: obtaining a first request, where the first request is associated with a first input/output I/O task (S301); determining, based on a first correspondence, a first processor core corresponding to the first request, where the first correspondence is a correspondence between an I/O task and a processor core (S302); and determining, from a memory set corresponding to the first processor core, a target memory corresponding to the first request (S303). A memory corresponding to the first request and the first processor core configured to process the first I/O task are in a same memory set, so that the first processor core does not need to remotely access the memory when processing the first I/O task. This can increase a data processing speed and improve processor performance.

## Description

### CROSS-REFERENCE TO RELATED APPLICATIONS

This application claims priority to Chinese Patent Application No. 202210912516.8, filed with the China National Intellectual Property Administration on July 30, 2022 and entitled "DATA PROCESSING METHOD AND APPARATUS", which is incorporated herein by reference in its entirety.

### TECHNICAL FIELD

Embodiments of the present invention relate to the computer field, and in particular, to a data processing method and apparatus.

### BACKGROUND

With development of a multi-core technology, a memory capacity in a processor (also referred to as an offload card) (CPU Central Processing Unit, CPU) is expanded, there are more CPU cores (cores), and a memory is increasingly large. To reduce contention among a plurality of CPU cores for bus bandwidth when the plurality of CPU cores access the memory, memory resources (also referred to as a memory set) corresponding to the plurality of CPU cores are generally separately configured for the plurality of CPU cores. Because a local memory (that is, the memory resource corresponding to the CPU core) is close to the processor, a speed of accessing the local memory by the CPU core is higher than a speed of accessing a remote memory (that is, a memory resource other than the memory resource corresponding to the CPU core).

However, in conventional technologies, the memory resource of the CPU core may be inconsistent with that of to-be-processed data. Consequently, the CPU core needs to access a remote memory when processing the to-be-processed data, leading to reduction in a data processing speed and deterioration in processor performance.

### SUMMARY

Embodiments of the present invention provide a data processing method and apparatus, to increase a data processing speed and improve processor performance.

According to a first aspect, an embodiment of the present invention provides a data processing method. The method may be implemented by a processor. The method specifically includes the following steps.

The processor obtains a first request, where the first request is associated with a first input/output (I/O) task. The processor determines, based on a first correspondence, a first processor core corresponding to the first request, where the first correspondence is a correspondence between an I/O task and a processor core. The processor determines, from a memory set corresponding to the first processor core, a target memory corresponding to the first request.

According to the foregoing method, a memory corresponding to the first request and the first processor core configured to process the first I/O task are in a same memory set, so that the first processor core does not need to remotely access the memory when processing the first I/O task, to increase a data processing speed and improve processor performance.

Optionally, the processor may obtain a plurality of I/O requests. In this case, the processor may simultaneously associate, for the plurality of I/O requests, I/O tasks corresponding to the I/O requests, to increase a data processing speed.

Optionally, the plurality of I/O requests may be determined, by using a DMA technology, by the processor based on I/O events obtained from a plurality of queues.

In a possible design, the memory set corresponding to the first processor core is included in a memory set of a first memory node, the first memory node corresponds to at least one processor core, and the at least one processor core includes the first processor core. In this case, in an application scenario of a plurality of memory nodes, consistency between storage locations of the first I/O task and the first processor core can be implemented without affecting load balancing of the processor, to improve processor performance.

In a possible design, the determining, from a memory set corresponding to the first processor core, a memory corresponding to the first request includes: sending a second request to the first memory node, where the second request is used to request to allocate the memory corresponding to the first request; and receiving indication information of the target memory.

Optionally, the method further includes: determining, based on a second correspondence, the first memory node corresponding to the first processor core, where the second correspondence is a correspondence between a plurality of processor cores in the processor and a plurality of memory nodes, the plurality of memory nodes include the first memory node, and the plurality of processor cores include the first processor core.

In a possible design, the processor may schedule the I/O task based on a scheduling period.

Optionally, the first processor core corresponding to the first request is determined based on the first correspondence in a first scheduling period, where the first correspondence is a scheduling result of an I/O task in a second scheduling period, and the second scheduling period is a scheduling period before the first scheduling period. In this case, it can be ensured that a scheduling result in the second scheduling period is obtained. Therefore, the first correspondence used in the first scheduling period is a correspondence obtained after the processor performs dynamically adjustment in the second scheduling period, to further ensure consistency between storage locations of the first I/O task and the first processor core, and improve processor performance.

Optionally, the processor may dynamically adjust a quantity of I/O tasks on each CPU core. In this case, the processor can implement load balancing by adjusting a correspondence between a CPU core and an I/O task, to improve processor performance.

Optionally, the processor may determine the I/O task on each CPU core based on pressure feedback information of the plurality of CPU cores. For example, in each scheduling period, the correspondence between the CPU core and the I/O task is adjusted once based on the pressure feedback information. In this case, the processor can implement load balancing of the processor through dynamic adjustment, to improve processor performance.

In a possible design, the method further includes: executing the first I/O task in the target memory.

In a possible design, after an I/O task stored in any memory set is processed by the processor core, a memory in the memory set may be released. In this case, the memory is released in time, so that memory resources can be saved, and load of the processor can be reduced.

According to a second aspect, an embodiment of this application provides a data processing apparatus, including an input/output module and a processing module. The input/output module is configured to obtain a first request, where the first request is associated with a first input/output I/O task. The processing module is configured to determine, based on a first correspondence, a first processor core corresponding to the first request, where the first correspondence is a correspondence between an I/O task and a processor core. The processing module is further configured to determine, from a memory set corresponding to the first processor core, a target memory corresponding to the first request.

Optionally, the input/output module may be further configured to obtain a plurality of I/O requests.

Optionally, the plurality of I/O requests may be determined, by using a DMA technology, by the processor based on I/O events obtained from a plurality of queues.

In a possible design, the memory set corresponding to the first processor core is included in a memory set of a first memory node, the first memory node corresponds to at least one processor core, and the at least one processor core includes the first processor core.

In a possible design, the processing module is further configured to: send a second request to the first memory node, where the second request is used to request to allocate the memory corresponding to the first request; and receive indication information of the target memory corresponding to the first request.

Optionally, the processing module is further configured to determine, based on a second correspondence, the first memory node corresponding to the first processor core, where the second correspondence is a correspondence between a plurality of processor cores in the processor and a plurality of memory nodes, the plurality of memory nodes include the first memory node, and the plurality of processor cores include the first processor core.

In a possible design, the processing module is specifically configured to: schedule the I/O task based on a scheduling period.

Optionally, the processing module is specifically configured to determine, based on the first correspondence, the first processor core corresponding to the first request in a first scheduling period, where the first correspondence is a scheduling result of an I/O task in a second scheduling period, and the second scheduling period is a scheduling period before the first scheduling period.

Optionally, the processor may dynamically adjust a quantity of I/O tasks on each CPU core.

Optionally, the processor may determine the I/O task on each CPU core based on pressure feedback information of the plurality of CPU cores.

In a possible design, the processing module is further configured to execute the first I/O task in the target memory.

In a possible design, after an I/O task stored in any memory set is processed by the processor core, a memory in the memory set may be released.

According to a third aspect, an embodiment of this application provides another data processing apparatus, including a processor and a storage. Optionally, the apparatus further includes a communication interface. The storage is configured to store a computer program or instructions. The processor is configured to invoke the computer program or the instructions from the storage and run the computer program or the instructions. When the processor executes the computer program or the instructions in the storage, the data processing apparatus is enabled to perform any one of the implementations of the data processing method in the first aspect. Optionally, there are one or more processors, and there are one or more storages. Optionally, the processor includes one or more processor cores.

Optionally, the storage includes one or more memory nodes.

Optionally, the storage may be integrated with the processor, or the storage and the processor are disposed separately.

Optionally, the storage may be a volatile memory or a non-volatile memory, or may include a volatile memory and a non-volatile memory.

According to a fourth aspect, an embodiment of this application further provides a computer program. When the computer program runs on a computer, the computer is enabled to perform any implementation of the data processing method shown in the first aspect.

According to a fifth aspect, an embodiment of this application further provides a computer-readable storage medium. The computer-readable storage medium stores a computer program. When the computer program is executed by a computer, the computer is enabled to perform any implementation of the data processing method shown in the first aspect.

According to a sixth aspect, an embodiment of this application further provides a chip. The chip is configured to read a computer program stored in a storage, to perform any implementation of the data processing method shown in the first aspect.

For technical effects that can be achieved in any one of the second aspect to the sixth aspect, refer to descriptions of technical effects that can be achieved in any one of the possible designs of the first aspect. Details are not described herein again.

### BRIEF DESCRIPTION OF DRAWINGS

FIG. 1 is a diagram of an architecture of a conventional processor according to an embodiment of this application;
FIG. 2 is a diagram of a structure of a processor according to an embodiment of this application;
FIG. 3 is a schematic flowchart of a data processing method according to an embodiment of this application;
FIG. 4 is a schematic flowchart of another data processing method according to an embodiment of this application;
FIG. 5 is a diagram of a structure in which a processor and a computing server are used together according to an embodiment of this application;
FIG. 6 is a diagram of a structure in which a processor and a storage server are used together according to an embodiment of this application;
FIG. 7 is a diagram of a structure of a data processing apparatus according to an embodiment of this application; and
FIG. 8 is a diagram of a structure of another data processing apparatus according to an embodiment of this application.

### DESCRIPTION OF EMBODIMENTS

To make the objectives, technical solutions, and beneficial effects of the present invention clearer, the following further describes the present invention in detail with reference to the accompanying drawings and embodiments. It should be understood that specific embodiments described herein are merely used to explain the present invention but are not intended to limit the present invention.

The following describes some terms in this application, to facilitate understanding by a person skilled in the art.
(1) A non-uniform memory access architecture (Non-Uniform Memory Access Architecture, NUMA) is a memory architecture designed for an electronic device with a multiprocessor (or a multi-core processor). In the MUMA, memory access time of the electronic device depends on a location of the memory relative to the processor. Therefore, in the NUMA, the processor accesses a local memory of the processor faster than a non-local memory (where the memory is located in another processor or a memory shared between processors).
(2) A storage performance development kit (Storage Performance Development Kit, SPDK) provides a set of tools and libraries for compiling a high-performance and scalable user-mode storage application, and can switch a driver from a kernel mode to a user mode as much as possible, to avoid a performance loss caused by system invoking. In addition, the storage performance development kit can convert a kernel mode of an operating system from the user mode to the kernel mode by completely polling hardware instead of relying on a conventional interruption mode. Therefore, a delay caused by switching and interruption processing between kernel processes is eliminated, to improve performance. The user mode is a kernel state required by the operating system, and is used to run a user program. The kernel mode is another kernel state required by the operating system, and is used to run an operating system program. An SPDK framework includes a block device abstraction layer (Block Device Abstraction Layer, bDEV) virtual device. As a subsystem in the SPDK framework, the block device abstraction layer virtual device is configured to provide general user-mode block storage abstraction.
   A propose of the SPDK is to use networking, processing, and storage technologies of Intel (Intel) to maximize excellent performance of a solid-state storage medium. Compared with a conventional input/output (input/output, I/O) manner, the SPDK uses two key technologies: user space (User space I/O, UIO) and pooling (pooling). Most drivers can run in the user mode by using the UIO technology, to avoid a problem that the drivers need to be updated with a kernel update, so as to reduce substantial processing overheads caused by kernel context switching and interruption, and allow more clock cycles to be used for actual data storage. In a pooling polling mode, the kernel state can be changed by polling a hardware queue in the operating system, instead of changing the kernel state based on the interruption mode in a conventional method. This changes a basic model of the conventional I/O, to avoid a delay and overheads caused by the interruption, and improve I/O efficiency.
(3) Direct memory access (Direct memory access, DMA) is a memory access technology for performing direct data transmission between storages or between a peripheral and a storage. For example, the DMA technology allows hardware subsystems (or computer peripherals) inside some electronic devices to read and write, independently and directly, a system memory without requiring a central processing unit (CPU) for processing.
(4) Process (process) and thread (thread):
   The process is a minimum unit for resource allocation.

The thread, also referred to as a logical thread, is a minimum unit for program execution. One thread may include one or more instructions, and therefore processing run time of threads may be different.

It can be learned from the foregoing definition that resources are allocated to a process, and all threads in a same process share all resources of the process. One thread can belong to only one process, and one process may have at least one thread. One thread is a single sequential control flow in a process. A plurality of threads can be concurrently executed in one process, and the threads may be used to execute different tasks in parallel. For a multi-core processor, different cores may be configured to execute different threads. Therefore, tasks can be implemented in parallel. In this application, the thread may be understood as a smallest pipeline unit in specific data processing performed by the processor. It should be understood that one core may correspond to one or more pipelines to implement parallel multi-task processing.

(5) A task (task) is an activity completed by software. A service flow (or a service or an application) may include one or more tasks. One task includes at least one process or at least one thread. For example, one task may be at least one process, may be at least one thread, or may include a combination of a process and a thread.

(6) An I/O request (I/O request) corresponds to a set of continuous data included in a memory block. The set of data describes one or more I/O operations, and is used to transfer read and write operations across devices and processes.

(7) Non-volatile memory express (Non-Volatile Memory Express, NVMe) is a logical device interface specification for accessing a non-volatile memory medium (for example, a solid-state disk drive using a flash memory) attached via a peripheral component interconnect express (Peripheral Component Interconnection Express, PCIe) bus.

(8) Network-based non-volatile memory express over fabrics (NVMe over Fabrics, NVMe-oF, or NoF) aims to use NVMe to connect a host to a storage through a network structure. An NVMe over Fabrics protocol defines a manner of implementing an NVMe function by using various general transport layer protocols. NVMe-oF is an extension of an NVMe protocol on a network, and an extension range of NVMe-oF is far beyond that of a current server equipped with a solid-state disk (Solid-State Disk or Solid-State Drive, SSD). NVMe-oF inherits all advantages of NVMe, including a lightweight and efficient command set, multi-core awareness, and protocol parallelism. NVMe-oF is a real network-independent protocol because NVMe-oF supports all common structures (fabrics), including a fiber channel, an InfiniBand (InfiniBand) technology, and an Ethernet.

It should be noted that, in descriptions of this application, terms such as "first" and "second" are only used for distinguishing and description, and cannot be understood as an indicating or implying relative importance or indicating or implying a sequence.

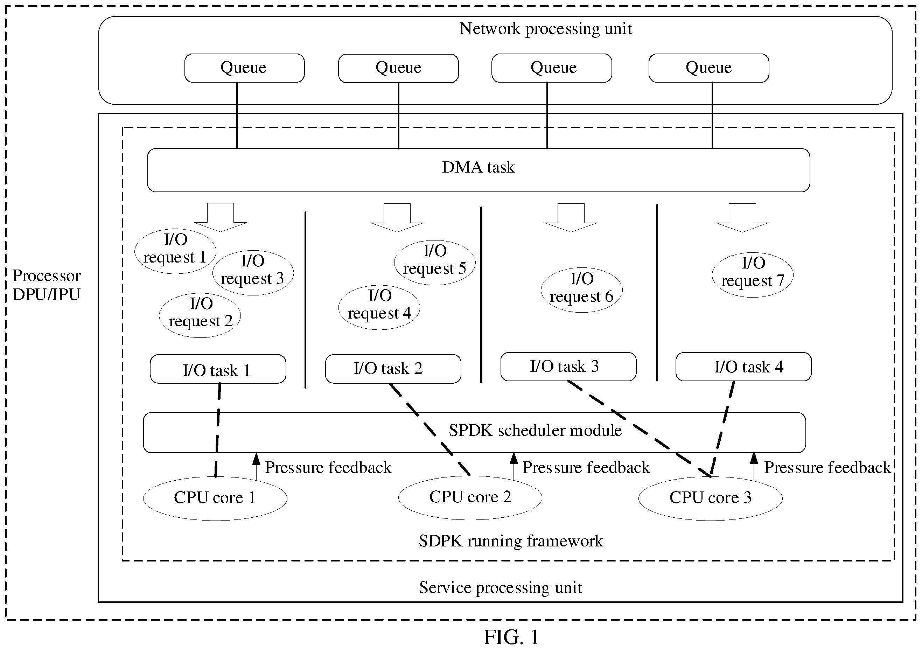

FIG. 1 is an example diagram of an architecture of a conventional processor. As shown in FIG. 1, the processor includes a network processing unit and a service processing unit. The service processing unit may perform data storage and processing by using an SDPK running framework. The SDPK running framework includes an SPDK scheduler (scheduler) module and at least one CPU core. The processor may be a data processing unit (Data Processing Unit, DPU) or an infrastructure processing unit (infrastructure processing unit, IPU).

To reduce contention among a plurality of CPU cores for bus bandwidth when the plurality of CPU cores access a memory, currently, a NUMA architecture is generally used to implement some functions (for example, a storage function) of the processor. In the architecture, physical resources of a server can be divided into a plurality of nodes. Each node is configured with a corresponding memory resource, and each node is configured to provide a resource for a CPU core in the node.

Still using FIG. 1 as an example, the network processing unit may generate an I/O event in a plurality of queues (Queues). The service processing unit may convert the I/O event into an I/O request by using a DMA technology. In addition, data corresponding to the I/O request is randomly allocated to a memory resource of any NUMA node. When executing a corresponding I/O task (I/O task), the CPU core may obtain and process data of an I/O request associated with the I/O task from the NUMA node.

Because quantities of I/O requests generated by the plurality of queues generated by the network processing unit vary greatly, quantities of I/O requests associated with the I/O task are also inconsistent. Consequently, pressure and load on the plurality of CPU cores are unbalanced, and processor performance is reduced. Based on this, when the DPU and the IPU implement storage offloading, an SPDK user-mode protocol stack is generally used. At a front end, hardware processes a virtual I/O device (Virtual I/O Device, VirtIO) protocol, an NVMe protocol, or a Nof protocol to generate a user-mode I/O request. At a back end, the I/O request is processed in the SPDK user-mode framework and is written into a bDEV virtual device. Specifically, the SPDK scheduler module in the service processing unit may dynamically adjust a quantity of I/O tasks on each CPU core, to balance the pressure and the load on the plurality of CPU cores.

However, such a dynamic adjustment method is used, so that a correspondence between a CPU core and an I/O task changes. This may cause a problem that when the CPU core processes the I/O request, the CPU core and a memory corresponding to the I/O request are not in a same NUMA node. It is clear that, a speed of accessing cross-NUMA data by the CPU core is low, and processor performance is also reduced. Therefore, a current data processing method may need to be improved.

An embodiment of this application provides a data processing method, so that a CPU core and to-be-processed data corresponding to the CPU core are located in a same memory set. Therefore, a data processing speed can be increased, and processor performance and stability can be improved. The method may be applied to a processor. The processor may be an entire data processing apparatus, or may be some components of the data processing apparatus. The processor may be implemented by a combination of software and hardware or implemented by using hardware. For example, the apparatus may be implemented by executing software, or may be implemented by using hardware such as a chip. This is not specifically limited in this application.

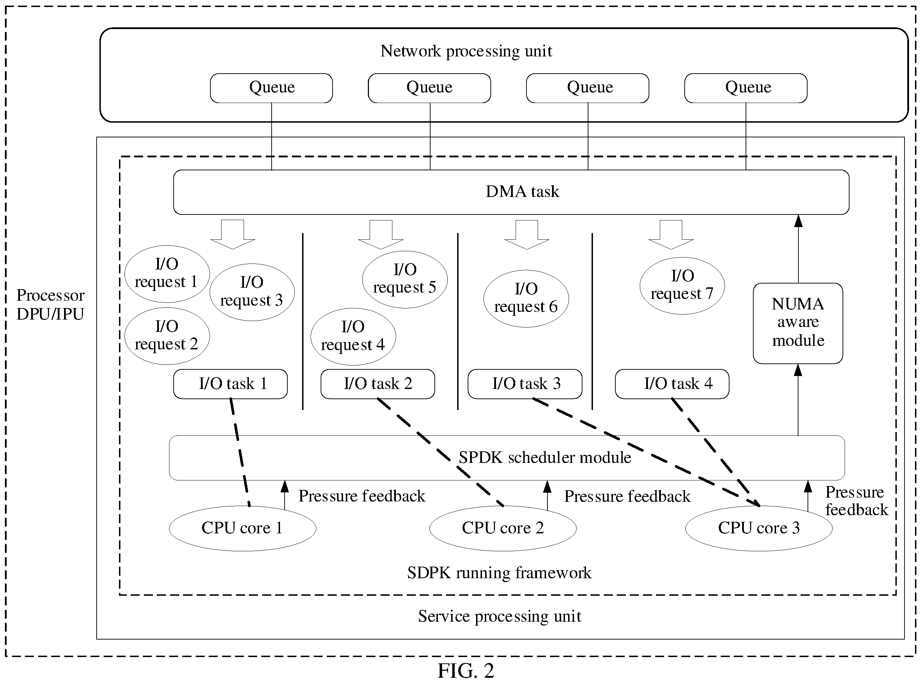

FIG. 2 is a diagram of a structure of a processor to which a data processing method is applied according to an embodiment of this application. As shown in FIG. 2, based on the structure of the processor shown in FIG. 1, an SDPK running framework of the processor may further include: a NUMA aware module (NUMA Aware module). For a function of a module other than the NUMA aware module in the processor, refer to function descriptions of a corresponding module in the processor shown in FIG. 1, and a storage is not described again.

The NUMA aware module may interact with the SPDK scheduler module and a module configured to process a DMA task. The NUMA aware module may implement coordination between hardware and software, to improve processor performance. Optionally, the NUMA aware module may obtain scheduling information from the SPDK scheduler module. The NUMA aware module may further feed back the scheduling information to the module configured to process the DMA task. The DMA task includes data access by using a DMA technology.

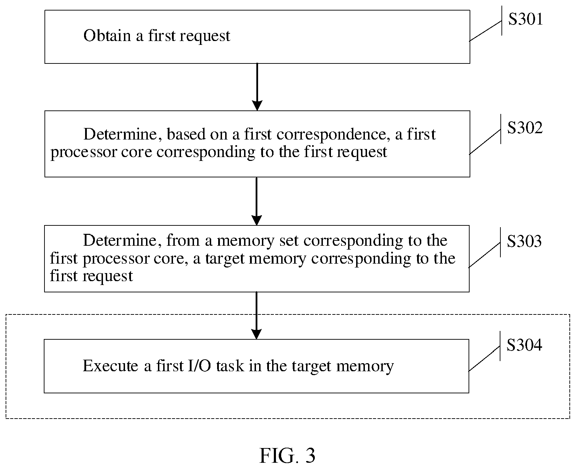

To increase a data processing speed and improve processor performance, an embodiment of this application provides a data processing method. The method may be applied to the processor shown in FIG. 2. FIG. 3 is a schematic flowchart of a data processing method according to an embodiment of this application. Refer to FIG. 3. The following describes the method provided in this embodiment of this application.

S301: A processor obtains a first request, where the first request is associated with a first I/O task. The first request may be an I/O request.

Optionally, an action in step S301 may be performed by the network processing unit shown in FIG. 2, or may be jointly performed by the network processing unit shown in FIG. 2 and the module configured to process the DMA task in the service processing unit shown in FIG. 2.

Optionally, the processor may obtain a plurality of I/O requests. I/O tasks associated with the plurality of I/O requests may be the same or different.

For example, with reference to FIG. 2, the plurality of I/O requests may include I/O request 1, an I/O request 2, an I/O request 3, an I/O request 4, an I/O request 5, an I/O request 6, and an I/O request 7, and the plurality of I/O tasks include an I/O task 1, an I/O task 2, an I/O task 3, and an I/O task 4. The I/O request 1, the I/O request 2, and the I/O request 3 may be associated with the I/O task 1. The I/O request 4 and the I/O request 5 may be associated with the I/O task 2. The I/O request 6 may be associated with the I/O task 3. The I/O request 7 may be associated with the I/O task 4.

Optionally, the plurality of I/O requests may be determined, by using a DMA technology, by the processor based on I/O events obtained from a plurality of queues. For example, the I/O event may be obtained by the network processing unit in the processor shown in FIG. 2 from a server.

S302: The processor determines, based on a first correspondence, a first processor core corresponding to the first request, where the first correspondence is a correspondence between an I/O task and a processor core. For a multi-core processor, different cores may be configured to execute different threads. In other words, different CPU cores may correspond to different I/O tasks. The processor may determine, based on a correspondence between the I/O tasks and the CPU cores, the first processor core corresponding to the first request.

Optionally, an action in step S302 may be performed by the module configured to process the DMA task in the service processing unit shown in FIG. 2.

Further, with reference to FIG. 2, the processor includes a CPU core 1, a CPU core 2, and a CPU core 3. The CPU core 1 may be configured to execute the I/O task 1. The CPU core 2 may be configured to execute the I/O task 2. The CPU core 3 may be configured to execute the I/O task 3 and the I/O task 4. In other words, the first correspondence includes that the CPU core 1 corresponds to the I/O task 1, the CPU core 2 corresponds to the I/O task 2, and the CPU core 3 corresponds to the I/O task 3 and the I/O task 4.

It is assumed that the first request is the I/O request 1. Based on the foregoing example, because the I/O request 1 is associated with the I/O task 1, and the CPU core 1 corresponds to the I/O task 1, the processor may determine that a processor core corresponding to the I/O request 1 is the CPU core 1. A same method is used to determine a processor core corresponding to another I/O request. For brevity, details are not described herein again.

In a possible design, the processor may schedule the I/O task based on a scheduling period. For example, the processor may determine, based on the first correspondence, the first processor core corresponding to the first request in a first scheduling period, where the first correspondence is a scheduling result of an I/O task in a second scheduling period, and the second scheduling period is a scheduling period before the first scheduling period. For example, the second scheduling period is a previous scheduling period of the first scheduling period.

Optionally, an action in the design may be performed by the SPDK scheduler module in the service processing unit shown in FIG. 2.

Optionally, before the action shown in step S301 or step S302 is performed, in other words, before the first scheduling period starts, for example, in the second scheduling period, the processor may dynamically adjust a quantity of I/O tasks in each CPU core by using the SPDK scheduler module shown in FIG. 2. Optionally, the SPDK scheduler module in the processor may obtain pressure feedback information from the plurality of CPU cores. The SPDK scheduler module may further determine the I/O task on each CPU core based on pressure feedback information of the plurality of CPU cores.

Optionally, the processor may obtain scheduling information from the SPDK scheduler module by using the NUMA aware module shown in FIG. 2, and feed back the scheduling information to the processor. The scheduling information may be a dynamically adjusted correspondence between a CPU core and an I/O task in the second period. In other words, the scheduling information includes a CPU core bound to the I/O task in the first period.

S303: The processor determines, from a memory set corresponding to the first processor core, a target memory corresponding to the first request. Optionally, the first processor core may determine the memory set corresponding to the first processor core, to apply for, from the memory set, the target memory corresponding to data of the first request. For example, assuming that the first request is the I/O request 1, and the first processor core corresponding to the first request is the CPU core 1, the processor may select, from a memory set corresponding to the CPU core 1, a target memory as a memory of data corresponding to the I/O request 1.

Optionally, an action in step S303 may be performed by the module configured to process the DMA task in the service processing unit shown in FIG. 2.

According to the foregoing data processing method in this application, a memory corresponding to the first request and the first processor core configured to process the first I/O task are in a same memory set, so that the first processor core does not need to remotely access the memory when processing the first I/O task, to increase a data processing speed and improve processor performance.

In a possible design, the memory set corresponding to the first processor core is included in a memory set of a first memory node, the first memory node corresponds to at least one processor core, and the at least one processor core includes the first processor core.

For example, memory nodes are, NUMA nodes. Each NUMA node may correspond to at least one processor core. Assuming that the first memory node to which the first processor core belongs is a NUMA node 1, the memory set corresponding to the first processor core is included in the memory set corresponding to the NUMA node 1.

Optionally, the processor may determine, based on a second correspondence, the first memory node corresponding to the first processor core, where the second correspondence is a correspondence between a plurality of processor cores in the processor and a plurality of memory nodes, the plurality of memory nodes include the first memory node, and the plurality of processor cores include the first processor core. It should be understood that the second correspondence may be fixed or may be variable. For a specific limitation manner, refer to a conventional technology in the art. This is not limited in this application.

For example, the plurality of memory nodes include a NUMA node 1 and a NUMA node 2, and the second correspondence may include that the NUMA node 1 corresponds to the CPU core 1 and the CPU core 2, and the NUMA node 2 corresponds to the CPU core 3. Still using an example in which the first processor core is the CPU core 1, the processor may determine, based on the second correspondence, that a memory node corresponding to the CPU core 1 is the NUMA node 1.

Optionally, the processor may send a second request to the first memory node, where the second request is used to request to allocate the memory corresponding to the first request. The processor may further receive indication information of the target memory corresponding to the first request.

Optionally, an action of sending the second request and an action of receiving the indication information may be performed by the module configured to process the DMA task in the service processing unit shown in FIG. 2.

For example, assuming that the first memory node is the NUMA node 1, and the first request is the I/O request 1, the processor may send the second request to the NUMA node 1, where the second request is used to apply for a memory in the NUMA node 1 for the first request. The NUMA node 1 may allocate a target memory to the I/O request 1 based on the second request. Correspondingly, the processor may receive indication information indicating the target memory. Further, the processor may store, in the target memory by using a DMA technology, the to-be-processed data corresponding to the first request. In this case, in a scenario in which the processor core and a memory resource have a NUMA affinity, the processor does not need to perform remote access due to dynamic adjustment of the correspondence between the CPU core and the I/O task, so that a problem that a data processing speed is reduced due to the remote access can be avoided.

In this design, a memory of the first processor core and a memory of the first request belong to a same memory node. When processing the first request, the first processor core does not need to obtain the memory of the first request through the remote access, so that memory access time can be reduced.

S304: The processor executes the first I/O task in the target memory. It should be understood that an action in step S304 may be performed by any processor core in the service processing unit shown in FIG. 2. For example, the CPU core 1 in the processor may execute the first I/O task in the target memory in the NUMA node 1. Similarly, another processor core in the processor may also execute a corresponding I/O task in a memory node to which the another processor core belongs. It should be understood that step S304 is an optional step, and the processor may choose to perform or not perform the step.

Optionally, after an I/O task stored in any memory set is processed by the processor core, a memory in the memory set may be released. In this case, the memory is released in time, so that memory resources can be saved, and load of the processor can be reduced. For example, after an I/O task stored in any MUMA node is processed by the processor core, a memory of the MUMA node may be released.

In a possible design, after the first scheduling period ends, the processor may further obtain a scheduling result of the I/O task in the first scheduling period, and perform actions in step S301 to step S303 by using the scheduling result as the first correspondence, to implement data processing in a third scheduling period. The third scheduling period is a scheduling period after the first scheduling period.

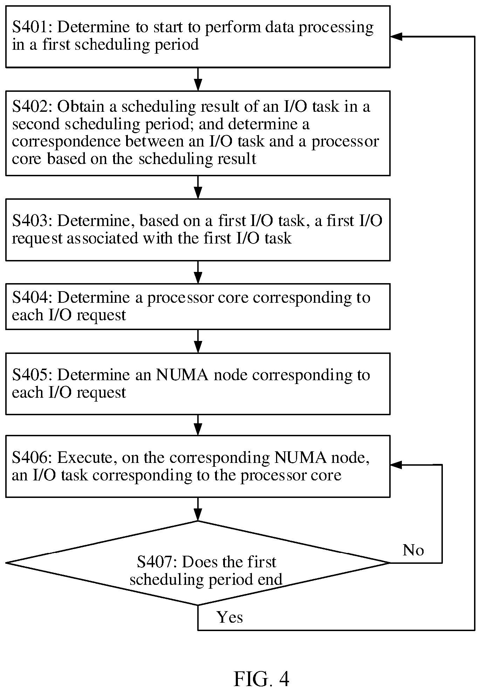

FIG. 4 is a schematic flowchart of another data processing method according to an embodiment of this application. Refer to FIG. 4. The following describes the method provided in this embodiment of this application.

S401: A processor determines to start to perform data processing in a first scheduling period.

S402: The processor obtains a scheduling result of an I/O task in a second scheduling period, where the second scheduling period is a scheduling period before the first scheduling period; and determines a correspondence between an I/O task and a processor core based on the scheduling result.

For example, an action in step S402 may be the same as or different from the action of determining the first correspondence in step S302. For brevity, details are not described herein again.

S403: The processor determines, based on a first I/O task, a first I/O request associated with the first I/O task. It should be understood that the first I/O task may be associated with a plurality of (two or more) I/O requests. For example, the I/O requests may be obtained based on I/O events generated in a plurality of queues by using a DMA technology.

For example, an action in step S403 may be the same as or different from the action in step S301. For brevity, details are not described herein again.

S404: The processor determines, based on an association relationship determined in step S402 and step S403, a processor core corresponding to each of the I/O requests.

For example, an action in step S404 may be the same as or different from the action of determining the first processor core corresponding to the first request in step S302. For brevity, details are not described herein again.

S405: The processor obtains an NUMA node corresponding to each processor core, to determine the NUMA node corresponding to each of the I/O requests.

For example, an action in step S405 may be the same as or different from the action of determining the memory set corresponding to the first processor core in step S303. For brevity, details are not described herein again.

S406: The processor core in the processor executes, on the corresponding NUMA node, an I/O task corresponding to the processor core.

For example, an action in step S406 may be the same as or different from the action of executing the first I/O task in the target memory in step S304. For brevity, details are not described herein again.

S407: The processor determines whether the first scheduling period ends. If scheduling does not end, the action shown in step S406 is performed; or if the scheduling ends, the action shown in step S401 is performed. In other words, it is confirmed that data processing in a next scheduling period starts. It should be understood that whether the scheduling period ends may be determined in a plurality of forms. This is not limited in this application.

Optionally, after an I/O task stored in a same MUMA node is processed by the processor core, a memory of the MUMA node may be released. In this case, the memory is released in time, so that memory resources can be saved, and load of the processor can be reduced.

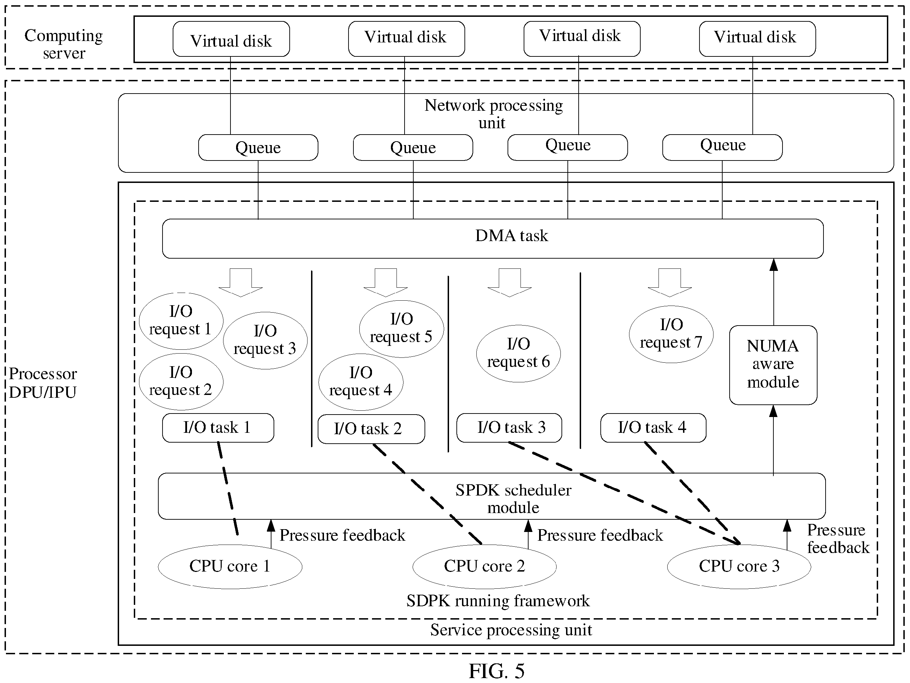

FIG. 5 is a diagram of a structure in which a processor and a computing server are used together according to an embodiment of this application. As shown in FIG. 5, the processor is connected to the computing server. The computing server includes a plurality of virtual disks, and the plurality of virtual disks are connected to a plurality of queues in the processor. The processor may have a same structure as the processor shown in FIG. 2. Each virtual disk may include but is not limited to a VirtIO block storage device (VirtIO block device, VirtIO-blk), a VirtIO small computer system interface storage device (VirtIO Small Computer System Interface device, VirtIO SCSI device), and/or an NVMe device. This is not limited in this application.

The data processing method provided in this application is described herein with reference to FIG. 5. When the processor and the computing server shown in this application are used together, the virtual disks of the computing server generate I/O requests, and send the I/O requests to the plurality of queues of the processor. Correspondingly, after the queues in the processor receive the I/O requests from the computing server, the processor may perform the actions shown in step S301 to step S303 (or step S304), or perform the actions shown in step S401 to step S407, to implement data processing.

In a scenario in which there are a plurality of multi-NUMA nodes, a load balancing method of an SPDK scheduler module is used, so that a processor core that runs an I/O task and a memory in which to-be-processed data corresponding to an I/O request is located may be located in different NUMA nodes. Consequently, read/write performance of a virtual disk in the computing server fluctuates, and stability of the computing server is reduced. However, according to the foregoing data processing method, when the processor and the computing server are used together, the processor may apply for, for a first request, a memory in a NUMA node that is consistent with a first processor core that processes a first I/O task, to reduce a performance loss caused by cross-NUMA read/write, avoid fluctuation of read/write performance of a virtual disk, and improve stability of the computing server.

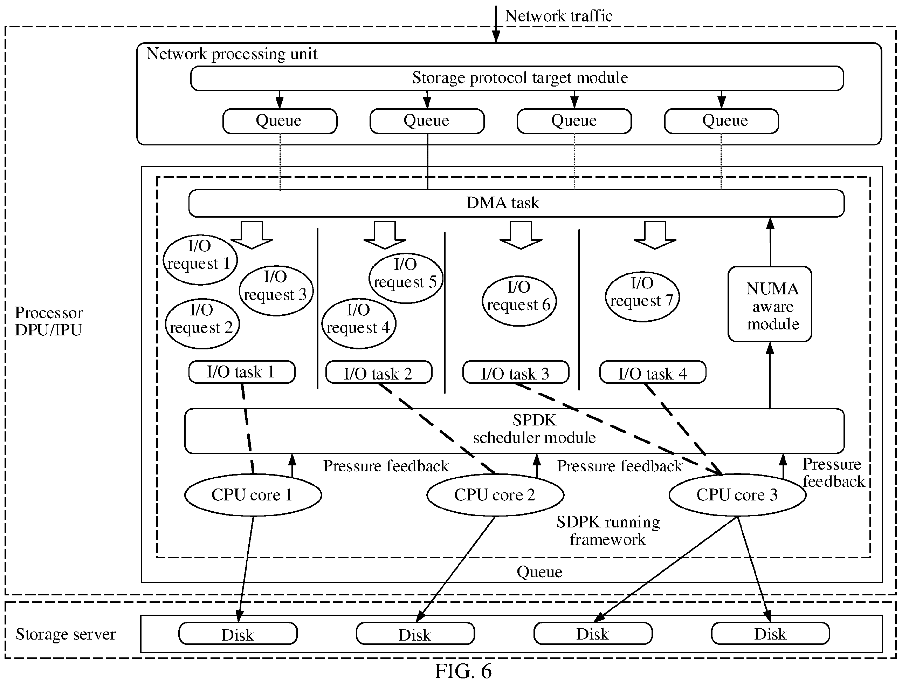

FIG. 6 is a diagram of a structure in which a processor and a storage server are used together according to an embodiment of this application. As shown in FIG. 6, the processor is connected to the storage server. The storage server includes a plurality of disks (which, for example, may be a large quantity of disks). The plurality of disks may be connected to a plurality of processor cores in the processor, to implement data transmission between the processor and the storage server. A network processing unit in the processor may include a storage protocol target module (Storage Protocol Target Module). The storage protocol target module is connected to a plurality of queues in the processor. Another structure of the processor may be the same as the structure of the processor shown in FIG. 2. A correspondence between the plurality of processor cores in the processor and the disks in the storage server may be preset, or may dynamically change. This is not limited in this application.

The data processing method provided in this application is described herein with reference to FIG. 6. When the processor and the storage server shown in this application are used together, the storage protocol target module in the network processing unit in the processor may process received network traffic, to obtain a plurality of I/O requests. The processor may perform the actions shown in step S301 to step S303 (or step S304), or perform the actions shown in step S401 to step S407, to implement data processing. The storage server may receive processing results of the I/O requests from the processor, and store the processing results in the disks. For example, the processor may further directly write the processing results of the I/O requests into the disks of the storage server. Further, after completing the foregoing write operation, the processor may further release a memory in a corresponding NUMA node.

In a scenario in which there are a plurality of NUMA nodes, a load balancing method of an SPDK scheduler module is used, so that a processor core that runs an I/O task and a memory in which to-be-processed data corresponding to an I/O request is located may be located in different NUMA nodes. Consequently, read/write performance of a disk in the storage server fluctuates, and stability of the storage server is reduced. However, according to the foregoing data processing method, when the processor and the storage server are used together, the processor may apply for, for a first request, a memory in a NUMA node that is consistent with a first processor core that processes a first I/O task, to reduce a performance loss caused by cross-NUMA read/write, avoid fluctuation of read/write performance of a disk, and improve stability of the storage server.

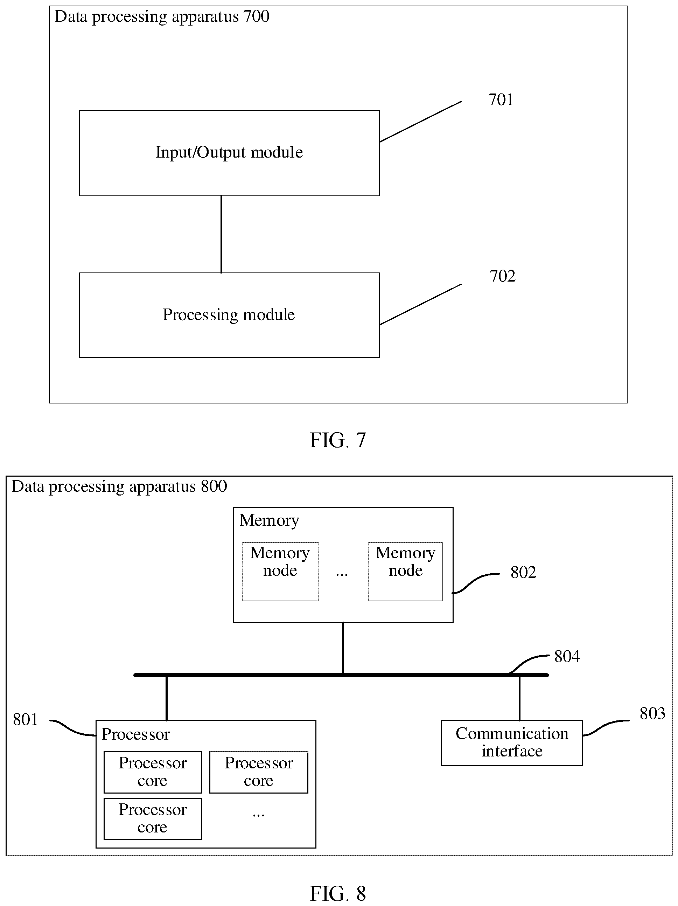

Based on a same technical concept, this application further provides a data processing apparatus. The data processing apparatus is configured to implement the data processing method provided in the foregoing embodiments. Refer to FIG. 7. The data processing apparatus 700 includes an input/output module 701 and a processing module 702. For example, the input/output module 701 may be a part or all of the network processing unit in the processor shown in FIG. 2. The processing module 702 may be a part or all of the service processing unit. For example, the processing module 702 may include a NUMA aware module, an SPDK scheduling module, and at least one CPU core.

The input/output module 701 is configured to obtain a first request, where the first request is associated with a first input/output I/O task. The processing module 702 is configured to determine, based on a first correspondence, a first processor core corresponding to the first request, where the first correspondence is a correspondence between an I/O task and a processor core. The processing module 702 is further configured to determine, from a memory set corresponding to the first processor core, a target memory corresponding to the first request.

In an implementation, the memory set corresponding to the first processor core is included in a memory set of a first memory node, the first memory node corresponds to at least one processor core, and the at least one processor core includes the first processor core.

In an implementation, the processing module 702 is further configured to: send a second request to the first memory node, where the second request is used to request to allocate the memory corresponding to the first request; and receive indication information of the target memory corresponding to the first request.

In an implementation, the processing module 702 is further configured to determine, based on a second correspondence, the first memory node corresponding to the first processor core, where the second correspondence is a correspondence between a plurality of processor cores in the processor and a plurality of memory nodes, the plurality of memory nodes include the first memory node, and the plurality of processor cores include the first processor core.

In an implementation, the processing module 702 is specifically configured to determine, based on the first correspondence, the first processor core corresponding to the first request in a first scheduling period, where the first correspondence is a scheduling result of an I/O task in a second scheduling period, and the second scheduling period is a scheduling period before the first scheduling period.

In an implementation, the processing module 702 is further configured to: execute the first I/O task in the target memory.

Based on a same technical concept, an embodiment of this application further provides another data processing apparatus. The data processing apparatus 800 may implement the data processing method provided in the foregoing embodiments, and has a function of the processor provided in the foregoing embodiments. Refer to FIG. 8. The data processing apparatus 800 includes a storage 802 and a processor 801. Optionally, the data processing apparatus 800 further includes a communication interface 803. The communication interface 803, the processor 801, and the storage 802 are connected to each other. Optionally, there may be one or more processors 801, and one or more storages 802. Optionally, the processor 801 may include one or more processor cores. Optionally, the storage 802 may include one or more memory nodes.

Optionally, the communication interface 803, the processor 801, and the storage 802 are connected to each other via a bus 804. The bus 804 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one bold line is used to represent the bus in FIG. 8, but this does not mean that there is only one bus or only one type of bus.

The communication interface 803 is configured to receive and send a signal, to implement communication with another device other than the data processing apparatus.

For a function of the processor 801, refer to the description in the foregoing embodiment. Details are not described herein again. The processor 801 may be a central processing unit (central processing unit, CPU), a network processor (network processor, NP), a combination of a CPU and an NP, or the like. The processor 801 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof. The function may be implemented by the processor 801 by using hardware. Certainly, the function may be implemented by executing corresponding software by using hardware.

The storage 802 is configured to store program instructions and the like. Specifically, the program instructions may include program code, and the program code includes computer operation instructions. The storage 802 may include a random access memory (random access memory, RAM), and may further include a non-volatile memory (non-volatile memory), for example, at least one magnetic disk memory. The processor 801 executes the program instructions stored in the storage 802, to implement the function, so as to implement the method provided in the foregoing embodiments.

Based on a same technical concept, an embodiment of this application further provides a computer program. When the computer program runs on a computer, the computer is enabled to perform the method provided in the foregoing embodiments.

Based on a same technical concept, an embodiment of this application further provides a computer-readable storage medium. The computer-readable storage medium stores a computer program. When the computer program runs on a computer, the computer is enabled to perform the method provided in the foregoing embodiments.

The storage medium may be any usable medium that can be accessed by the computer. The following provides an example but does not impose a limitation: The computer-readable medium may include a RAM, a ROM, an EEPROM, a CD-ROM, another optical disc storage, a disk storage medium, or another magnetic storage device, or any other medium that can carry or store expected program code in the form of an instruction or a data structure and can be accessed by the computer.

Based on a same technical concept, an embodiment of this application further provides a chip. The chip is configured to read a computer program stored in a storage, to implement the method provided in the foregoing embodiments.

A person skilled in the art should understand that embodiments of this application may be provided as a method, a system, or a computer program product. Therefore, this application may use the form of hardware only embodiments, software only embodiments, or embodiments with a combination of software and hardware. In addition, this application may use the form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be alternatively stored in a computer-readable memory that can indicate the computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more processes in the flowcharts and/or one or more blocks in the block diagrams.

Clearly, a person skilled in the art can make various modifications and variations to this application without departing from the spirit and scope of this application. In this case, provided that the modifications and variations made to this application fall within the scope of the claims of this application and equivalent techniques thereof, this application is also intended to cover such modifications and variations.

## Claims

1. A data processing method, applied to a processor, wherein the method comprises:
obtaining a first request, wherein the first request is associated with a first input/output I/O task;
determining, based on a first correspondence, a first processor core corresponding to the first request, wherein the first correspondence is a correspondence between an I/O task and a processor core; and
determining, from a memory set corresponding to the first processor core, a target memory corresponding to the first request.

2. The method according to claim 1, wherein the memory set corresponding to the first processor core is comprised in a memory set of a first memory node, the first memory node corresponds to at least one processor core, and the at least one processor core comprises the first processor core.

3. The method according to claim 2, wherein the determining, from a memory set corresponding to the first processor core, a memory corresponding to the first request comprises:
sending a second request to the first memory node, wherein the second request is used to request to allocate the memory corresponding to the first request; and
receiving indication information of the target memory.

4. The method according to claim 2 or 3, wherein the method further comprises:
determining, based on a second correspondence, the first memory node corresponding to the first processor core, wherein the second correspondence is a correspondence between a plurality of processor cores in the processor and a plurality of memory nodes, the plurality of memory nodes comprise the first memory node, and the plurality of processor cores comprise the first processor core.

5. The method according to any one of claims 1 to 4, wherein the determining, based on a first correspondence, a first processor core corresponding to the first request comprises:
determining, based on the first correspondence, the first processor core corresponding to the first request in a first scheduling period, wherein
the first correspondence is a scheduling result of an I/O task in a second scheduling period, and the second scheduling period is a scheduling period before the first scheduling period.

6. The method according to any one of claims 1 to 5, wherein the method further comprises:
executing the first I/O task in the target memory.

7. A data processing apparatus, comprising:
an input/output module, configured to obtain a first request, wherein the first request is associated with a first input/output I/O task; and
a processing module, configured to determine, based on a first correspondence, a first processor core corresponding to the first request, wherein the first correspondence is a correspondence between an I/O task and a processor core, wherein
the processing module is further configured to determine, from a memory set corresponding to the first processor core, a target memory corresponding to the first request.

8. The apparatus according to claim 7, wherein the memory set corresponding to the first processor core is comprised in a memory set of a first memory node, the first memory node corresponds to at least one processor core, and the at least one processor core comprises the first processor core.

9. The apparatus according to claim 8, wherein the processing module is further configured to:
send a second request to the first memory node, wherein the second request is used to request to allocate the memory corresponding to the first request; and
receive indication information of the target memory corresponding to the first request.

10. The apparatus according to claim 8 or 9, wherein the processing module is further configured to:
determine, based on a second correspondence, the first memory node corresponding to the first processor core, wherein the second correspondence is a correspondence between a plurality of processor cores in the processor and a plurality of memory nodes, the plurality of memory nodes comprise the first memory node, and the plurality of processor cores comprise the first processor core.

11. The apparatus according to any one of claims 8 to 10, wherein the processing module is specifically configured to:
determine, based on the first correspondence, the first processor core corresponding to the first request in a first scheduling period, wherein
the first correspondence is a scheduling result of an I/O task in a second scheduling period, and the second scheduling period is a scheduling period before the first scheduling period.

12. The apparatus according to any one of claims 8 to 11, wherein the processing module is further configured to:
execute the first I/O task in the target memory.

13. A computer-readable storage medium, wherein the computer-readable storage medium stores computer-executable instructions, and when the computer-executable instructions are invoked by a computer, the computer is enabled to perform the method according to any one of claims 1 to 6.

14. A chip, wherein the chip is coupled to a storage, and is configured to read and execute program instructions stored in the storage, to implement the method according to any one of claims 1 to 6.
